# EUROPEAN PATENT APPLICATION

(11) **EP 4 610 884 A1**
(43) Date of publication of application: **03.09.2025**
(21) Application number: 25155564.5
(22) Date of filing: 03.02.2025
(51) Int. Cl.: G06N 3/0475, G06N 3/094, G06N 3/10

(54) **METHOD AND SYSTEM OF VERIFYING DEEP LEARNING MODELS**

(30) Priority: 27.02.2024 IN 202441014356
(71) Applicant: L & T Technology Services Limited, Chennai 600089 (IN)
(72) Inventor: GUNASEKARAN, SURESH, 632301 Tiruvannamalai (IN); RAJAN, SANTHIYA, 641045 Coimbatore (IN)
(74) Representative: Studio Torta S.p.A.

(57) **Abstract**

A method (300) and system (100) of verifying deep learning models is disclosed. A computing device (102) creates a replica environment based on one or more deployment parameters. Data control flow of the trained DL model is verified in the replica environment. A reference model performance score is determined based on processing of a reference dataset by the trained DL model. A plurality of test datasets is determined based on the reference dataset using a generative deep learning model. A test model performance score is determined based on processing of each of the plurality of test datasets by the trained DL model. Data performance of the trained DL model is verified based on a comparison of the test model performance score corresponding to each of the plurality of test datasets and the reference model performance score corresponding to the reference dataset.

## Description

### Technical Field

This disclosure relates generally to deep learning models, and more particularly to a method and system of verifying deep learning models.

### BACKGROUND

Deep learning models provide necessary support in handling laborious tasks, harnessing their formidable computational powers to attain performance levels parallel to human capabilities in critical functions. These models comprise of numerous neurons resembling the human brain and operate by processing input data and learning from it using various algorithms. Consequently, the deep learning models help in performing various tasks in a speedy manner and with enhanced efficiency. Such models find applications across a wide spectrum of application areas and are being seamlessly integrated with the day-to-day aspects of human workloads.

Despite the remarkable technological achievements of deep learning models, they exhibit limitations in certain aspects of learning and deployment. In numerous scenarios, it becomes evident that these models are sensitive to noise or distortions. Consequently, when the input to deep learning models is subtly changed to even minimal extents, its accuracy may deteriorate substantially. Since, deep learning models are trained through backpropagation and possess nonintuitive characteristics and inherent blind spots. Further, the structure of deep learning models is intricately linked to non-obvious nuances of the data distribution. Therefore, this connection can lead to unexpected failures in the performance of the deep learning model. These limitations render the deep learning model less transparent and ultimately pose challenges to efficient task performance.

Therefore, there is a requirement for an efficient and effective methodology for verifying deep learning model to analyse the robustness of the deep learning model to noise or distortions.

### SUMMARY OF THE INVENTION

In an embodiment, a method for verifying a trained deep learning (DL) model is disclosed. The method may include creating, by a computing device, a replica environment based on one or more deployment parameters. In an embodiment, the replica environment may be about same as an initial deployment environment. The method may further include verifying, by the computing device, data control flow of the trained DL model in the replica environment. The method may further include uploading, by the computing device and upon the verification of the data flow, a reference dataset that may include labelled test data and corresponding label information of the reference dataset. The method may include determining, by the computing device, a reference model performance score based on processing of the reference dataset by the trained DL model in the replica environment. The method may further include determining, by the computing device, a plurality of test datasets based on the reference dataset using a generative deep learning model. In an embodiment, the plurality of test datasets may include an adversarial dataset, a correlated dataset, a fooling dataset, an outlier dataset and an augmented dataset. The method may further include determining, by the computing device, a test model performance score based on processing of each of the plurality of test datasets by the trained DL model. The method may further include verifying, by the computing device, data performance of the trained DL model based on a comparison of the test model performance score corresponding to each of the plurality of test datasets and the reference model performance score corresponding to the reference dataset.

In another embodiment, a system of verifying a trained deep learning (DL) model is disclosed. The system may include a processor, a memory communicably coupled to the processor, wherein the memory may store processor-executable instructions, which when executed by the processor may cause the processor to create a replica environment based on one or more deployment parameters. In an embodiment, the replica environment is about same as an initial deployment environment. Further, the processor may verify data control flow of the trained DL model in the replica environment. The processor may upon the verification of the data flow, upload a reference dataset including labelled test data and corresponding label information of the reference dataset. The processor may further determine, a reference model performance score based on processing of the reference dataset by the trained DL model in the replica environment. Further, the processor may determine a plurality of test datasets based on the reference dataset using a generative deep learning model. In an embodiment, the plurality of test datasets may include an adversarial dataset, a correlated dataset, a fooling dataset, an outlier dataset and an augmented dataset. Further, the processor may determine a test model performance score based on processing of each of the plurality of test datasets by the trained DL model. The processor may further verify data performance of the trained DL model based on a comparison of the test model performance score corresponding to each of the plurality of test datasets and the reference model performance score corresponding to the reference dataset.

### BRIEF DESCRIPTION OF THE DRAWINGS

**FIG.1** illustrates a block diagram of an exemplary verification system for verifying deep learning models, in accordance with an embodiment of the present disclosure.
**FIG. 2** illustrates a functional block diagram of a computing device, in accordance with an embodiment of the present disclosure.
**FIG. 3** illustrates a flowchart of a method of verifying deep learning models, in accordance with an embodiment of present disclosure.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

The neural networks provide necessary support in handling various laborious tasks. They are utilized for harnessing their formidable computational powers to attain performance levels akin to human capabilities in critical functions. Despite the remarkable technological achievements of neural networks, they exhibit limitations when a negligible amount of noise is added in the input as compared to the training data. Therefore, present disclosure provides a methodology to make neural networks sensitive to different types of data inputs and ensuring accurate results.

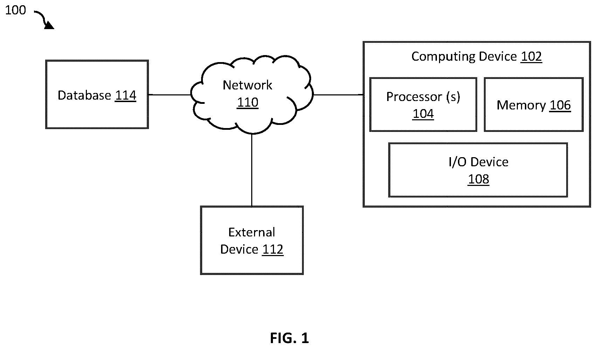

Referring now to **FIG. 1****,** a block diagram of an exemplary verification system 100 for verifying deep learning models is illustrated, in accordance with an embodiment of the present disclosure. The verification system 100 may include a computing device 102, an external device 112, and a database 114 communicably coupled to each other through a wired or wireless communication network 110. The computing device 102 may include a processor 104, a memory 106 and an input/output (I/O) device 108.

In an embodiment, examples of processor(s) 104 may include, but are not limited to, an Intel^{®} Itanium^{®} or Itanium 2 processor(s), or AMD^{®} Opteron^{®} or Athlon MP^{®} processor(s), Motorola@ lines of processors, Nvidia^{®}, FortiSOC^{™} system on a chip processors or other future processors.

In an embodiment, the memory 106 may store instructions that, when executed by the processor 104, and cause the processor 104 to verify deep learning models for data compatibility, as discussed in more detail below. In an embodiment, the memory 106 may be a non-volatile memory or a volatile memory. Examples of non-volatile memory may include but are not limited to, a flash memory, a Read Only Memory (ROM), a Programmable ROM (PROM), Erasable PROM (EPROM), and Electrically EPROM (EEPROM) memory. Further, examples of volatile memory may include but are not limited to, Dynamic Random Access Memory (DRAM), and Static Random-Access memory (SRAM).

In an embodiment, the I/O device 108 may include variety of interface(s), for example, interfaces for data input and output devices, and the like. The I/O device 108 may facilitate inputting of instructions by a user communicating with the computing device 102. In an embodiment, the I/O device 108 may be wirelessly connected to the authentication device 102 through wireless network interfaces such as Bluetooth^{®}, infrared, or any other wireless radio communication known in the art. In an embodiment, the I/O device 108 may be connected to a communication pathway for one or more components of the computing device 102 to facilitate the transmission of inputted instructions and output results of data generated by various components such as, but not limited to, processor(s) 104 and memory 106.

In an embodiment, the database 114 may be enabled in a cloud or a physical database and may store a reference dataset, and training data. In an embodiment, the training data may include a plurality of test datasets that may be output by the computing device 102. In an embodiment, the database 114 may store data input by an external device 112 or output generated by the computing device 102.

In an embodiment, the communication network 110 may be a wired or a wireless network or a combination thereof. The network 110 can be implemented as one of the different types of networks, such as but not limited to, ethernet IP network, intranet, local area network (LAN), wide area network (WAN), the internet, Wi-Fi, LTE network, CDMA network, 5G and the like. Further, network 110 can either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further network 110 can include a variety of network devices, including routers, bridges, servers, computing devices, storage devices, and the like.

In an embodiment, the computing device 102 may receive a request for performing verification of deep learning models from an external device 112 through the network 110. In an embodiment, the computing device 102 and the external device 112 may be a computing system, including but not limited to, embedded devices, single board computers, microcontrollers, system on chip, a smart phone, a laptop computer, a desktop computer, a notebook, a workstation, a portable computer, a handheld, a scanner, or a mobile device. In an embodiment, the computing device 102 may be, but not limited to, in-built into the external device 112 or may be a standalone computing device.

In an embodiment, the computing device 102 may perform various processing for verifying deep learning models. By way of an example, the computing device 102 may train a deep learning (DL) model. In an embodiment, the DL model may include interconnection of numerous neurons to form an architecture. In an embodiment, examples of the DL model may include but is no limited to, convolutional neural networks, recurrent neural networks, generative adversarial networks, autoencoders, generative models, large language models, multimodal large language models, diffusion models, etc.

In an embodiment, the computing device 102 may create a replica environment based on one or more deployment parameters. In an embodiment the replica environment may be about same as an initial deployment environment in which the DL model may have been initially deployed. In an embodiment, the one or more deployment parameters may include a type of operating system, a type of programming language, and a type of deep learning framework used in the initial deployment environment for deployment of the trained deep learning model.

Further, the computing device 102 may verify data control flow of the trained DL model in the replica environment. In an embodiment the data control flow of the trained DL model may be verified based on uploading the trained DL model in the replica environment. The data control flow of the trained DL model may be further verified based on verifying an end to end control flow in the trained DL model uploaded in the replica environment. The computing device 102 may further upload a reference dataset that may include labeled test data and corresponding label information of the reference dataset.

Further, the computing device 102 may determine a reference model performance score based on processing of the reference dataset by the trained DL model in the replica environment. In an embodiment, the determination of the reference model performance score may include determination of at least one of reference output parameters based on the deployment of the trained DL model in the replica environment. In an embodiment, the computing device 102 may determine the reference output parameters by validating the reference dataset based on a shape compatibility between a shape of an input and/or an output corresponding to the reference dataset. In an embodiment, the reference output parameters may be based on technical application of the DL model. In an embodiment, the reference output parameters may include accuracy, error, confusion matrix, mean average precision, intersection over union, BLEU score, word error rate, character error rate, intersection over union matrix, and so on.

Further, the computing device 102 may determine a plurality of test datasets based on the reference dataset using a generative deep learning model. In an embodiment, the plurality of test datasets may include an adversarial dataset, a correlated dataset, a fooling dataset, an outlier dataset, and an augmented dataset. In an embodiment, the generative deep learning model may include but is not limited to autoencoders, generative adversarial network (GAN), large language models (LLM), diffusion models, multimodal large language models, etc.

Further, the computing device 102 may determine a test model performance score based on processing of each of the test datasets by the trained DL model. In an embodiment, the determination of the test model performance score for each of the plurality of test datasets may include determining a performance score based on accuracy and error of each of the plurality of test datasets based on the processing of each of the plurality of test datasets by the trained DL model. The determination of the test model performance score for each of the plurality of test datasets may further include calculating an average of the performance score of each of the plurality of test datasets. The determination of the test model performance score for each of the plurality of test datasets may include determining a normalised performance score based on normalizing the average of the performance score of each of the plurality of test datasets in a range of about 0 to 1.

Further, the computing device 102 may verify data performance of the trained DL model based on a comparison of the test model performance score corresponding to each of the plurality of test datasets and the reference model performance score corresponding to the reference dataset.

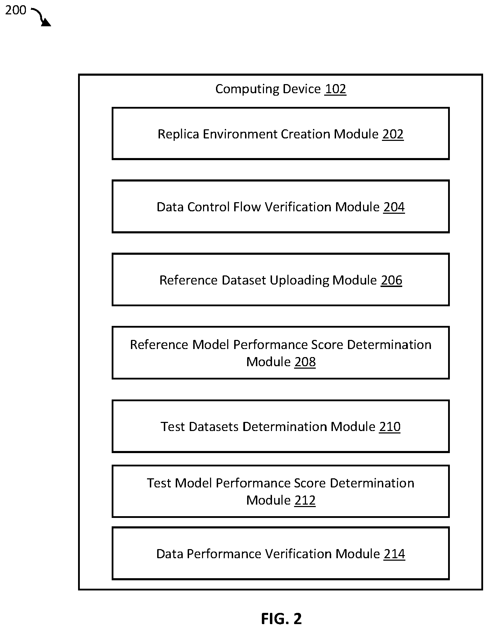

Referring now to FIG. 2 a functional block diagram of a computing device 102 is illustrated, in accordance with some embodiments of the present disclosure. In an embodiment, the computing device 102 may train a deep learning (DL) model. Further, the computing device 102 may include a replica environment creation module 202, a data control flow verification model 204, a reference dataset uploading module 208, a reference model performance score determination module 210, a test datasets determination module 210, a test model performance score determination module 212, and data performance verification module 214.

The replica environment creation module 202 may create a replica environment based on one or more deployment parameters. In an embodiment, the replica environment may be about same as initial deployment environment. In an embodiment, the one or more deployment parameters may include a type of operating system, a type of programming language, and a type of deep learning framework used in the initial deployment environment for deployment of the trained deep learning model. In an embodiment, the type of programming language may include but is not limited to C, C++, python, java, etc. In an embodiment, the type of operating system may include, but is not limited to, windows, macOS, Linux, Android, iOS, Chrome OS, etc .... In an embodiment, the type of deep learning framework may include, but are not limited to, TensorFlow, PyTorch, Keras, Caffe, MXNet, Chainer, TensorRT, Theano, etc.

Further, the data control flow verification module 204 may verify data control flow of the trained DL model in the replica environment. In an embodiment, the data control flow of the trained DL model may be verified based on the trained DL model that may be uploaded in the replica environment. Further, the data control flow of the trained DL model may be verified based on verification of an end to end control flow in the trained DL model uploaded in the replica environment. In an embodiment, the verification of an end to end control flow may require determining end to end connection between the input and the output in the architecture of the trained DL model. Further, in some embodiments, the data control flow of the trained DL model may be verified based on custom elements such as activation functions, layers, optimizers, or loss functions that may be present in the architecture.

Further, upon verification of the data control flow, the reference dataset uploading module 206 may upload a reference dataset that may include labeled test data and corresponding label information of the reference dataset. In an embodiment, the labeled test data may include test input data and its corresponding ground truth value of output data. In an embodiment, the ground truth value of output data may include the labeled test data. In an embodiment, the reference dataset may be uploaded based on the technical application of the trained DL model. In an exemplary scenario, the reference dataset may be images and corresponding class information for classification in case of technical application being image recognition. Further, in case the technical application is object detection, the reference dataset may include but not limited to, images, class, localization information, etc. Further, in case the technical application is automatic speech recognition, the reference dataset may include but not limited to, audio and transcript, etc.

Further, the reference model performance score determination module 208 may determine a reference model performance score based on the processing of the reference dataset by the trained DL model in the replica environment. In an embodiment, the determination of the reference model performance score may include, determining at least one of reference output parameters based on the deployment of the trained DL model in the replica environment. In an embodiment, the computing device 102 may determine the reference output parameters by validating the reference dataset based on a shape compatibility between a shape of an input and/or an output corresponding to the reference dataset. In an embodiment, the labeled test data may include label information that is expected to be output by the trained DL model based on the processing of the test input data. In an embodiment, the reference dataset uploading module 206 may determine the reference output parameters by validating the reference dataset based on a shape compatibility between the shape of the test input data and the output data of the reference dataset. In an exemplary scenario, in case the trained DL model is capable of outputting 10 classes and the number of classes in test data is less or greater than 10, then the reference dataset uploading module 206 may determine an error due to a mismatch in shape of the output data of the reference dataset and the output of the trained DL model. Further, in case of an error due to mismatch in shape of output data, the reference model performance score determination module 208 may request the user to upload an appropriate reference dataset that is compatible in shape with the trained DL model. Upon determination of the shape compatibility of the reference dataset, the reference model performance score determination module 208 may determine the reference output parameters depending upon the technical application of the trained DL model. In an embodiment, in case the technical application is object detection, the reference output parameters may include but are not limited to, accuracy, error, confusion matrix, mean average precision. Further, in another embodiment, in case the technical application is segmentation, then the reference output parameters may include, but are not limited to, intersection over union. In an embodiment, along with reference output parameters, basic attributes of the DL model are also determined. In an embodiment, the basic attributes of the DL model may include, but are not limited to, trainable parameters, model size (in MB) and inference time, etc.

Further, once the reference output parameters are determined, the test datasets determination module 210 may enable a generative deep learning model to determine a plurality of test datasets based on the reference dataset. In an embodiment, the generative deep learning model may include but is not limited to autoencoders, generative adversarial network (GAN), large language models (LLM), diffusion models, multimodal large language models, etc. In an embodiment, the plurality of test datasets may include an adversarial dataset, a correlated dataset, a fooling dataset, an outlier dataset, and an augmented dataset.

In an embodiment, the adversarial dataset may include a plurality of adversarial data samples. The adversarial data samples may be determined as modified inputs to fool the DL model. The adversarial data samples may be determined by making about negligible, often imperceptible changes to the reference data sample of the reference dataset that may not be perceived by human but may cause the trained DL model to misclassify or produce an erroneous output. In an embodiment, the adversarial data samples may be determined based on techniques such as, but not limited to, non-convex optimization, etc.

In another embodiment, the correlated dataset may include a plurality of correlated data samples. The correlated data samples may be referred to a set of data points where the values or characteristics of one sample may be related or connected to the values of another sample based on a correlation function. In an embodiment, the correlation may be increased inter-class and intra-class using one or more correlation function. In an embodiment, the correlation function may be a mathematical operation. Accordingly, the improved correlativity in the test dataset may help in analysing the behaviour of semantic information within the architecture of the trained DL model.

In an embodiment, the fooling dataset may include a plurality of fooling data samples. The fooling data samples may be referred to as inputs data samples determined to intentionally deceive or fool the DL model. It is to be noted that the fooling data samples may not be recognized by humans but these samples may be designed to exploit vulnerabilities in the DL model's decision-making process, causing it to make incorrect predictions or classifications.

In another embodiment, the outlier dataset may include a plurality of outlier data samples. The outlier data samples may be referred to data points that significantly deviate or differ from the majority of the data within the reference dataset. These data points are notably distinct in their values or characteristics compared to the rest of the observations. The outlier data samples may help to analyse the behaviour of the model for samples which may be totally unseen and not exposed during testing/training of the DL model.

In an embodiment, the augmented dataset may include a plurality of augmented data samples. The augmented data samples may be determined based on one or more augmentation methodologies such as, but not limited to, severe occlusions, domain shifts, spatial permutations, spatial patch-level permutations, adversarial and natural perturbations (noise, blur, contrast and pixelation artefacts). Further, the augmented data samples may be determined as samples with same colour/geometry but with different texture, characteristics specially for image-based data. The augmented data samples may be determined to reflect real time samples that may be present when the DL model may be deployed. In an exemplary embodiment, an example of generating an augmentation sample may be, but is not limited to, shift in position of dog as compared to the position in the captured the image of a dog. Accordingly, in case the captured image depicts a dog in a centre portion of the picture. The dog may be shifted towards the right in the augmented sample in order to check if the trained DL model is able to determine the dog in the picture when shifted to the right.

Further, the test model performance score determination module 212 may determine a test model performance score based on the processing of the each of the plurality of test datasets by the trained DL model in the replica environment. In an embodiment, the determination of the test model performance score for each of the plurality of test datasets may include determining a performance score based on accuracy and error of the trained DL model based on the processing of each of the plurality of test datasets by the trained DL model. Accordingly, a performance score for each of the adversarial dataset, the correlated dataset, the fooling dataset, the outlier dataset, and the augmented dataset may be determined.

In an embodiment, the determination of each of the plurality of test datasets may be done by optimizing a corresponding input sample of the reference dataset to maximize the output error of the trained DL model. Accordingly, the determination of each of the plurality of test datasets may be an iterative process of optimizing the corresponding input sample in a manner to maximize the prediction error. In an embodiment, the prediction error may be maximized by the optimized input sample until the properties of input sample are changed to an extent that the output class corresponding to optimized input sample gets changed. For example, an image of a cat may be modified until the trained DL model may classify it as a dog and not cat.

Further, the determination of the test model performance score for each of the plurality of test datasets may include calculating an average of the performance score of each of the plurality of test datasets. The determination of the test model performance score for each of the plurality of test datasets may include determining a normalized performance score based on normalizing the average of the performance score of each of the plurality of test datasets in a range of about 0 to 1. In an embodiment, the test model performance score may indicate the robustness of the trained DL model corresponding to each of the plurality of test datasets and real time conditions.

Further, the data performance verification module 214 may verify data performance of the trained DL model based on a comparison of the test model performance score corresponding to each of the plurality of test datasets and the reference model performance score corresponding to the reference dataset. In an embodiment, the comparison may be determined based on a difference between the test model performance score and the reference model performance score and may indicate the deviation of the DL model's performance from the reference model performance score. The difference also highlights a direct magnitude in which the model might fail in real time conditions. In case the test model performance score for any of the plurality of test datasets is not equal then the corresponding test dataset the trained DL model may be retrained based on backpropagation methodologies in order to make the trained DL model robust corresponding to each of the plurality of test datasets.

It should be noted that all such aforementioned modules 202-214 may be represented as a single module or a combination of different modules. Further, as will be appreciated by those skilled in the art, each of the modules 202-214 may reside, in whole or in parts, on one device or multiple devices in communication with each other. In some embodiments, each of the modules 202-214 may be implemented as a dedicated hardware circuit comprising custom application-specific integrated (ASIC) or gate arrays, off-the-shelf semiconductors such as logic chips, transistors, or other discrete components. Each of the modules 202-214 may also be implemented in a programmable hardware device such as a field programmable gate array (FGPA), programmable array logic, programmable logic device, and so forth. Alternatively, each of the modules 202-214 may be implemented in software for execution by various types of processors (e.g. processor 104). An identified module of executable code may, for instance, include one or more physical or logical blocks of computer instructions, which may, for instance, be organized as an object, procedure, function, or other construct. Nevertheless, the executables of an identified module or component need not to be physically located together but may include disparate instructions stored in different locations which, when joined logically together, include the module, and achieve the stated purpose of the module. Indeed, a module of executable code could be a single instruction and may even be distributed over several different code segments, among different applications, and across several memory devices.

As will be appreciated by one skilled in the art, a variety of processes may be employed for performing face recognition-based authentication. For example, the exemplary system 100 and the associated computing device 102 may verify deep learning models by the processes discussed herein. In particular, as will be appreciated by those of ordinary skill in the art, control logic and/or automated routines for performing the techniques and steps described herein may be implemented by the system 100 and the associated computing device 102 either by hardware, software, or combinations of hardware and software. For example, suitable code may be accessed and executed by the one or more processors on the system 100 to perform some or all of the techniques described herein. Similarly, application-specific integrated circuits (ASICs) configured to perform some, or all of the processes described herein may be included in the one or more processors on the system 100.

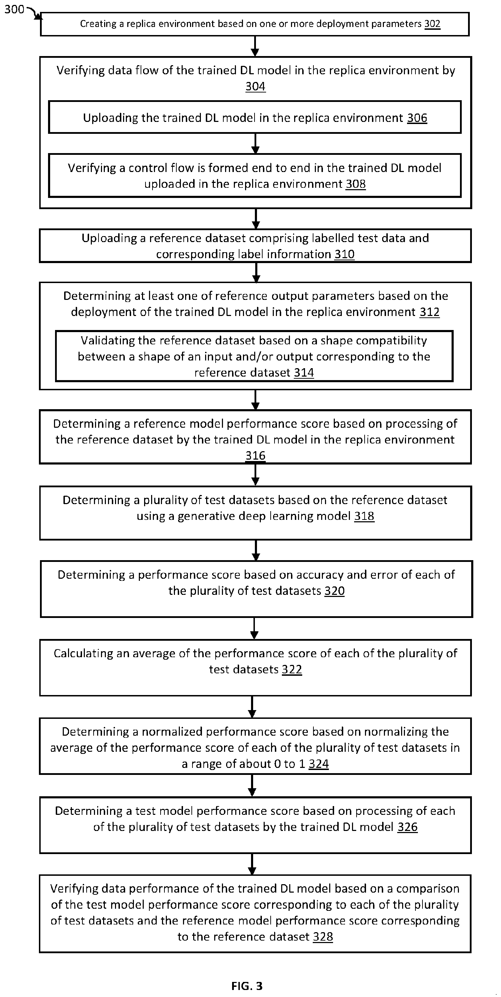

Referring now to **FIG. 3****,** a flowchart of a method 300 of verifying trained DL models is illustrated, in accordance with an embodiment of the present disclosure. In an embodiment, method 300 may include a plurality of steps that may be performed by the processor 104 to verify DL models for data robustness.

**FIG. 3** is explained in conjunction with **FIGs.** 1 and 2. Each step of the method 300 may be executed by various modules of the computing device 102.

At step 302, a replica environment may be created based on one or more deployment parameters. In an embodiment, the replica environment may be about same as an initial deployment environment. In an embodiment, the one or more deployment parameters may include a type of operating system, a type of programming language, and a type of deep learning framework used in the initial deployment environment for deployment of the trained deep learning model.

Further at step 304, data control flow of the trained DL model may be verified in the replica environment. In an embodiment the data control flow of the trained DL model may be verified based on sub-steps 306 and 308. At sub step 306, the trained DL model may be uploaded in the replica environment. Further, at sub step 308, the data control flow of the uploaded trained DL model may be verified based on, verification of an end to end control flow in the trained DL model uploaded in the replica environment.

Further at step 310, a reference dataset may be uploaded that may include labeled test data and corresponding label information of the reference dataset.

Further at step 312, at least one of reference output parameters may be determined based on the deployment of the trained DL model in the replica environment. In an embodiment, the reference output parameters may be determined based on sub step 314. At sub step 314, the reference dataset may be validated based on a shape compatibility between a shape of an input and/or an output corresponding to the reference dataset.

Further at step 316, a reference model performance score may be determined based on processing of the reference dataset by the trained DL model in the replica environment.

Further at step 318, a plurality of test datasets may be determined based on the reference dataset using a generative deep learning model. In an embodiment, the plurality of test datasets may include an adversarial dataset, a correlated dataset, a fooling dataset, an outlier dataset, and an augmented dataset.

Further at step 320, a performance score may be determined based on accuracy and error of each of the plurality of test datasets based on the processing of each of the plurality of test datasets by the trained DL model.

Further at step 322, an average of the performance score of each of the plurality of test datasets may be calculated.

Further at step 324, a normalised performance score may be determined based on normalizing the average of the performance score of each of the plurality of test datasets in a range of about 0 to 1.

Further at step 326, a test model performance score may be determined as the normalized performance score determined at step 324.

Further at step 328, performance of the trained DL model may be verified based on a comparison of the test model performance score corresponding to each of the plurality of test datasets and the reference model performance score corresponding to the reference dataset.

In an embodiment, challenges for verifying DL models may include but are not limited to complex scenarios, complex properties, ambiguity, scalability, human involvement, etc. The present disclosure ensures that the trained DL model is verified to handle such challenges. Accordingly, a data robust and verified trained DL model guarantees high stake decisions. In another embodiment, deployment of these untested DL models in the wild may poses accountability challenges such as bit are not limited to more due to efficient testing and alignment of predictive goals with outcomes by measuring potential failures, planning of fall backs, etc. by using the methodology of the present disclosure.

Thus, the disclosed method and system tries to overcome the technical problem of verifying deep learning models through an end-to-end automatic model verification framework that may be designed to analyse the performance of the DL model against such counter-intuitive behaviour.

As will be appreciated by those skilled in the art, the techniques described in the various embodiments discussed above are not routine, or conventional, or well-understood in the art. The techniques discussed above provide for verifying deep learning models.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps bring an improvement in the functioning of the device itself as the claimed steps provide a technical solution to a technical problem.

The specification has described method and system for verifying deep learning models. The illustrated steps are set out to explain the exemplary embodiments shown, and it should be anticipated that ongoing technological development will change the manner in which particular functions are performed. These examples are presented herein for purpose of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

It is intended that the disclosure and examples be considered as exemplary only, with a true scope of disclosed embodiments being indicated by the following claims.

## Claims

1. A method (300) of verifying a trained deep learning (DL) model, the method (300) comprising:
creating (302), by a computing device (102), a replica environment based on one or more deployment parameters,
wherein the replica environment is about same as an initial deployment environment;
verifying (304), by the computing device (102), data control flow of the trained DL model in the replica environment;
uploading (310), by the computing device (102) and upon the verification of the data flow, a reference dataset comprising labeled test data and corresponding label information of the reference dataset;
determining (316), by the computing device (102), a reference model performance score based on processing of the reference dataset by the trained DL model in the replica environment;
determining (318), by the computing device (102), a plurality of test datasets based on the reference dataset using a generative deep learning model,
wherein the plurality of test datasets comprises an adversarial dataset, a correlated dataset, a fooling dataset, an outlier dataset and an augmented dataset;
determining (326), by the computing device (102), a test model performance score based on processing of each of the plurality of test datasets by the trained DL model; and
verifying (328), by the computing device (102), data performance of the trained DL model based on a comparison of the test model performance score corresponding to each of the plurality of test datasets and the reference model performance score corresponding to the reference dataset.

2. The method (300) as claimed in claim 1, wherein the one or more deployment parameters comprises a type of operating system, a type of programming language, and a type of deep learning framework used in the initial deployment environment for deployment of the trained deep learning model.

3. The method (300) as claimed in claim 1, wherein the data control flow of the trained DL model is verified by:
uploading (306), by the computing device (102), the trained DL model in the replica environment; and
verifying (308), by the computing device (102), an end to end control flow in the trained DL model uploaded in the replica environment.

4. The method (300) as claimed in claim 1, wherein the determination of the reference model performance score comprising:
determining (312), by the computing device (102), at least one of reference output parameters based on the deployment of the trained DL model in the replica environment, and
wherein the reference output parameters comprise accuracy, error, confusion matrix, mean average precision, intersection over union, BLEU score, word error rate, character error rate, and intersection over union matrix.

5. The method (300) as claimed in claim 4, wherein the reference output parameters are determined by:
validating (314), by the computing device (102), the reference dataset based on a shape compatibility between a shape of an input and/or an output corresponding to the reference dataset.

6. The method (300) as claimed in claim 1, wherein the determination of the test model performance score for each of the plurality of test datasets, comprises:
determining (320), by the computing device (102), a performance score based on accuracy and error of each of the plurality of test datasets based on the processing of each of the plurality of test datasets by the trained DL model;
calculating (322), by the computing device (102), an average of the performance score of each of the plurality of test datasets; and
determining (324), by the computing device (102), a normalized performance score based on normalizing the average of the performance score of each of the plurality of test datasets in a range of about 0 to 1.

7. A system (100) for verifying a trained deep learning (DL) model, comprising:
a processor (104); and
a memory (106) communicably coupled to the processor (104), wherein the memory stores processor-executable instructions, which, on execution, cause the processor (104) to:
create a replica environment based on one or more deployment parameters,
wherein the replica environment is about same as an initial deployment environment;
verify data control flow of the trained DL model in the replica environment;
upon the verification of the data flow, upload a reference dataset comprising labeled test data and corresponding label information of the reference dataset;
determine a reference model performance score based on processing of the reference dataset by the trained DL model in the replica environment;
determine a plurality of test datasets based on the reference dataset using a generative deep learning model,
wherein the plurality of test datasets comprises an adversarial dataset, a correlated dataset, a fooling dataset, an outlier dataset and an augmented dataset;
determine a test model performance score based on processing of each of the plurality of test datasets by the trained DL model; and
verify data performance of the trained DL model based on a comparison of the test model performance score corresponding to each of the plurality of test datasets and the reference model performance score corresponding to the reference dataset.

8. The system (100) as claimed in claim 7, wherein the one or more deployment parameters comprises a type of operating system, a type of programming language, and a type of deep learning framework used in the initial deployment environment for deployment of the trained deep learning model.

9. The system (100) as claimed in claim 7, wherein to verify the data control flow of the trained DL model, the processor (104) is configured to:
upload the trained DL model in the replica environment; and
verify an end to end control flow in the trained DL model uploaded in the replica environment.

10. The system (100) as claimed in claim 7, wherein to determine the reference model performance score, the processor (104) is configured to:
determine at least one of reference output parameters based on the deployment of the trained DL model in the replica environment, and
wherein the reference output parameters comprise accuracy, error, confusion matrix, mean average precision, intersection over union, BLEU score, word error rate, character error rate, and intersection over union matrix.

11. The system (100) as claimed in claim 10, wherein to determine the reference output parameters, the processor (104) is configured to:
validate the reference dataset based on a shape compatibility between a shape of an input and/or an output corresponding to the reference dataset.

12. The system (100) as claimed in claim 11, wherein to determine the test model performance score for each of the plurality of test datasets, the processor (104) is configured to:
determine a performance score based on accuracy and error of each of the plurality of test datasets based on the processing of each of the plurality of test datasets by the trained DL model;
calculate an average of the performance score of each of the plurality of test datasets; and
determine a normalized performance score based on normalizing the average of the performance score of each of the plurality of test datasets in a range of about 0 to 1.
